Europäisches Patentamt

European Patent Office

Office européen des brevets

(11) Numéro de publication: **0 343 586 B1**

(12) **FASCICULE DE BREVET EUROPEEN**

(45) Date de publication de fascicule du brevet: **31.03.93**

(51) Int. Cl.5: **H01M 4/48**, H01M 4/06, H01M 6/36

(21) Numéro de dépôt: **89109233.0**

(22) Date de dépôt: **23.05.89**

(54) **Procédé de préparation d'un composé à base de dérivé d'oxyde de vanadium pour cathode de pile thermique.**

(30) Priorité: **25.05.88 FR 8806945**

(43) Date de publication de la demande:
**29.11.89 Bulletin 89/48**

(45) Mention de la délivrance du brevet:
**31.03.93 Bulletin 93/13**

(84) Etats contractants désignés:
**BE CH DE FR GB IT LI NL SE**

(56) Documents cités:
**EP-A- 0 145 261**   **DE-A- 2 142 922**
**US-A- 3 258 365**   **US-A- 3 311 503**
**US-A- 3 444 000**   **US-A- 3 470 027**

(73) Titulaire: **SAFT (inscrite au Registre du Commerce sous le numéro 343 588 737)**
**156 avenue de Metz**
**F-93230 Romainville(FR)**

(72) Inventeur: **Buchel, Jean-Pierre**
**7 rue Raymond Poincaré**
**F-94000 Creteil(FR)**
Inventeur: **Crepy, Gilles**
**409 Square du Dragon**
**F-91000 Evry(FR)**
Inventeur: **Danel, Véronique**
**2 rue A. Artaud**
**F-93110 Rosny(FR)**
Inventeur: **de Guibert, Anne**
**21 rue Poliveau**
**F-75005 Paris(FR)**

(74) Mandataire: **Weinmiller, Jürgen et al**
**Lennéstrasse 9 Postfach 24**
**W-8133 Feldafing (DE)**

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition (art. 99(1) Convention sur le brevet européen).

Rank Xerox (UK) Business Services
(3.10/3.5x/3.0.1)

## Description

La présente invention concerne un procédé de préparation d'un composé à base de dérivé d'oxyde de vanadium pour cathode de pile thermique selon le préambule de la revendication 1. Un tel procédé est connu, par exemple à partir du document DE-A-2 142 922.

L'oxyde de vanadium, notamment le pentoxyde de vanadium, ne peut être utilisé directement comme matière active cathodique dans une pile thermique, d'une part en raison de son absence de conductivité électronique, et, d'autre part, en raison de sa réactvité dans les milieux chlorure fondus.

Le mélange avec un conducteur électronique de type graphite ou noir de carbone, comme proposé dans le document ci-dessus, peut sembler une solution évidente pour l'homme de l'art pour améliorer la conductvité des cathodes. Cependant, lorsqu'on mélange $V_2O_5$ et du noir de carbone, et qu'on tente d'utiliser cette composition dans une cathode de pile thermique, on obtient des mélanges instables et peu conducteurs. En pile, le résultat se traduit toujours par des paliers de potentiel de décharge successifs. En outre, des mélanges contenant une quantité de graphite ou de noir de carbone suffisante pour améliorer la conductivité sont toujours très difficiles à pastiller.

D'autres méthodes ont été proposées pour préparer des dérivés d'oxyde de vanadium susceptibles de servir de matériaux cathodiques pour piles thermiques.

Le brevet US-A-4 315 905 propose en particulier de fabriquer un produit conducteur électronique, pour être utilisé en tant que matériau de cathode ou comme revêtement de cathode, en chauffant du pentoxyde de vanadium en atmosphère gazeuse réductrice ou neutre (azote hydrogéné ou hélium). On obtient ainsi un mélange contenant d'une part $V_6O_{13}$ et d'autre part un dérivé de $V_2O_5$ non identifié, mais aucun exemple d'utilisation de ce composé n'est donné.

Le document EP-A-0 145 261 (demande déposée le 6 novembre 1984) décrit l'utilisation d'un matériau cathodique choisi parmi un ou plusieurs composés suivants :

$V_6O_{13+x}(O \leq x \leq 0.5)$, $VO_{2\pm z}(O\leq z\leq 0.05)$, $Li_yV_2O_5$ $(0.88\leq y \leq1)$, $V_3O_7$ et $LiV_3O_8$.

Cependant, les composés décrits ci-dessus ne sont pas satisfaisants pour une utilisation comme matériau cathodique de pile thermique. En particulier, ils ne présentent pas une tension de décharge stable, comme le montrent les exemples de décharge donnés dans le brevet. Les courbes de décharge présentent, quel que soit le composé employé, une pente importante et des paliers multiples. En outre, le procédé de préparation nécessite plusieurs opérations successives avant que l'on puisse obtenir le mélange cathodique final contenant le conducteur électronique et une quantité d'électrolyte adaptée ; sa durée de préparation qui est de l'ordre de 8 heures à plusieurs jours est prohibitive.

La présente invention a pour but de mettre en oeuvre un procédé de préparation aisé d'un composé à base d'un dérivé d'oxyde de vanadium, susceptible d'être utilisé comme matériau cathodique dans une pile thermique et présentant une bonne stabilité de la tension de décharge.

La présente invention a pour objet un procédé de préparation d'un composé à base d'un dérivé d'oxyde de vanadium susceptible d'être utilisé comme matériau cathodique dans une pile thermique, procédé selon lequel on réalise un mélange pulvérulent contenant du pentoxyde de vanadium, un matériau carboné et de l'électrolyte de ladite pile, et caractérisé
- par le fait que dans ledit mélange, ledit matériau carboné se trouve dans une proportion en poids de $V_2O_5$ comprise entre 3% et 20%, et ledit électrolyte est un mélange d'halogénures alcalins se trouvant dans une proportion en poids de $V_2O_5$ comprise entre 15% et 50%,
- et par le fait que l'on effectue un traitement thermique dudit mélange pulvérulent à une température supérieure à la température de fusion dudit mélange d'halogénures, ladite température étant comprise entre 365° et 650°C, pendant une durée comprise entre 15 minutes et 2 heures.

De préférence,
- Ledit matériau carboné est du noir de fumée, tel que du noir de carbone, d'acétylène ou de benzène.
- Ledit mélange d'halogénures alcalins est un mélange d'halogénures de lithium et de potassium, choisi parmi l'eutectique LiCl-KCl, les mélanges LiCl-KCl contenant entre 50 % et 80 % de LiCl en fraction molaire, les mélanges ternaires LiCl-LiBr-LiF, LiCl-LiBr-KBr.
- La proportion en poids dudit matériau carboné est comprise entre 5 % et 10 %.
- La proportion en poids dudit mélange d'halogénures alcalins est comprise entre 30 % et 45 %.
- Ladite température de traitement est comprise entre 410°C et 550°C et la durée dudit traitement thermique est comprise entre 1/2 heure et 1 heure.

Le composé ainsi obtenu est broyé après refroidissement jusqu'à l'obtention d'une granulométrie inférieure à 100 microns. Il est mis ensuite sous forme de pastille pour être utilisé comme cathode.

La présente invention a également pour objet une pile thermique comportant la cathode précitée et en outre une anode de lithium ou en alliage de lithium choisi parmi les composés lithium-aluminium, lithium-silicium et lithium-bore, et un électrolyte composé d'un gélifiant et dudit mélange d'halogénures alcalins.

Ledit gélifiant peut être choisi parmi $SiO_2$, $MgO$, $Al_2O_3$.

De manière inattendue, il semble que lors de la fusion du pentoxyde de vanadium et du mélange d'halogénures alcalins, la présence de noir de fumée joue un rôle très particulier sur la nature du mélange obtenu. Ceci pourrait être expliqué par l'existence de liaisons carbone-oxygène superficielles formées pendant le traitement à haute température et facilitant ensuite les transferts électroniques.

Le mélange de $V_2O_5$ avec le carbone et le mélange d'halogénures alcalins permet pendant la période de traitement thermique une décomposition contrôlée et reproductible. Il est possible que le carbone joue également le rôle de catalyseur pendant cette décomposition.

Le procédé selon l'invention permet l'obtention d'un composé complexe, dont les propriétés sont bien adaptées pour l'utilisation en tant que cathode de pile thermique :
- Ce composé complexe est stable dans le domaine de température utile pour l'emploi en pile thermique.
- Il présente, en décharge à courant constant, un seul palier de décharge stable par rapport à une électrode de lithium ; ce palier peut se situer à + 2,5 Volts.
- Il est bien adapté pour la fabrication de pastilles minces.

D'autres caractéristiques et avantages de la présente invention apparaîtront au cours de la description suivante de modes de réalisation donnés à titre illustratif mais nullement limitatif.

Dans le dessin annexé :
- la figure 1 montre des courbes de décharge d'une cathode de l'art antérieur et d'une cathode obtenue par le procédé selon l'invention,
- la figure 2 montre une courbe de décharge pour une variante de cathode obtenue par le procédé selon l'invention,
- la figure 3 montre des courbes de décharge d'une batterie de piles thermiques selon l'invention, et d'une batterie de piles de l'art antérieur.

Dans un premier exemple de mise en oeuvre, on mélange intimement pendant une heure 100 grammes de poudre de $V_2O_5$ avec 50 grammes d'eutectique LiCl-KCl et 10 grammes de noir d'acétylène. Ce mélange est ensuite placé dans un four et porté sous atmosphère neutre, tel que l'argon, à 550°C pendant 30 minutes.

La composition A obtenue est refroidie à l'abri de l'humidité et broyée jusqu'à une granulométrie inférieure à 100 micromètres.

On réalise ensuite une cathode A d'épaisseur 0,4 mm par pastillage. On réalise un monocouple comportant une cathode A, un électrolyte à base de l'eutectique LiCl-KCl additionné d'un gélifiant tel que $SiO_2$, et un anolyte à base d'un alliage de lithium et d'aluminium LiAl.

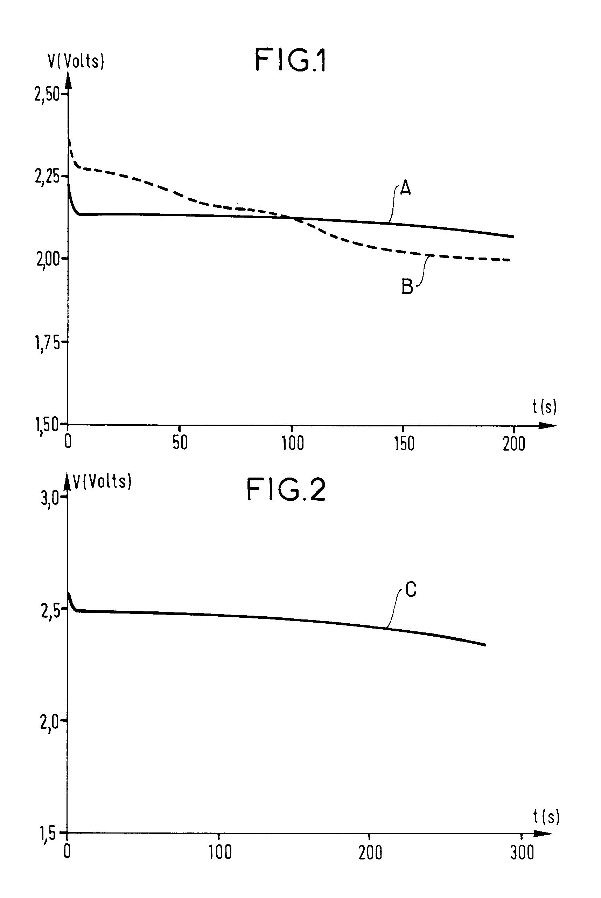

On a illustré dans la figure 1 dans un graphique donnant en ordonnées la tension V (en volts) et en abscisses le temps t en secondes, la décharge A du monocouple précédent avec une densité de courant de 100 mA/cm$^2$ et à 450°C. On observe un palier de tension à 2,15 volts.

On a représenté la décharge B, dans des conditions tout à fait analogues, d'une cathode de l'art antérieur réalisée par le procédé décrit dans le document EP-A-0 145 261, selon lequel on part d'un mélange comprenant $VO_2$ et $\gamma$-$LiV_2O_5$. On observe plusieurs paliers de décharge et l'intérêt de la composition selon l'invention apparaît ainsi très clairement.

On a réalisé d'autres compositions en partant des mêmes produits initiaux et dans les mêmes proportions que dans le premier exemple récité, et en modifiant le traitement thermique.

Le tableau I donne pour chaque traitement la tension initiale du monocouple Vo (en volts), la tension du palier V (en volts), la capacité C du monocouple (en mAh) avec une tension d'arrêt à 2,0 volts, et le rendement Rt en %.

Les conditions optimales se situent entre 410°C et 550°C avec une durée comprise entre 30 mn et 1 heure.

TABLEAU I

| Traitement | | Vo (V) | V palier (V) | Arrêt à 2,0 V/LiAl | |
|---|---|---|---|---|---|
| Température | Durée | | | C(mAh) | Rt(%)* |
| 365°C | 1 h | 2,85 | 2,50 2,25 2,15 | 9,2 | 44 |
| 365°C | 2 h | matériau | non | pastillable | |
| 550°C | 15 mn | 2,32 | 2,11 | 14,0 | 67 |
| 550°C | 30 mn | 2,30 | 2,11 | 13,8 | 72 |
| 550°C | 1 h | 2,22 | 2,15 | 19,6 | 74 |
| 550°C | 2 h | 2,25 | 2,12 | 12,6 | 60 |
| 650°C | 30 mn | 2,32 | 2,09 | 7,0 | 35 |
| 650°C | 1 h | 2,38 | 2,09 | 9,2 | 44 |

* Rt calculé sur 1 F

Dans l'exemple 2, on mélange comme précédemment 500 grammes de $V_2O_5$ avec 250 grammes d'électrolyte et 25 grammes de noir d'acétylène. Ce mélange a été porté à 410°C sous atmosphère neutre pendant 1 heure. La composition obtenue a été broyée et mise sous forme de pastille pour former une cathode C.

Un empilement composé de cette cathode, une pastille d'électrolyte LiCl-KCl avec gélifiant $Al_2O_3$, et une anode constituée d'une feuille mince d'alliage lithium-bore est déchargée à 450°C à courant constant de densité 100 mA/cm². La courbe correspondante C est donnée figure 2. On observe un palier de tension à 2,5 volts.

On réalise ensuite une batterie de piles obtenues par le même procédé que celui décrit précédemment. Le matériau cathodique est celui de l'exemple 1. Les pastilles d'électrolyte contiennent 85 % d'eutectique LiCl-KCl et 15 % de $SiO_2$. Les pastilles d'anolyte contiennent 90 % d'alliage LiAl et 10 % d'eutectique LiCl-KCl.

Un exemple de structure d'une telle batterie est décrit dans "Proceedings of the 32nd International Power Sources Symposium, Electrochemical Society Inc., 1986, pages 686 et suivantes" par J. Douglass BRISCOE, Daniel GLEN, SAFT America Inc.

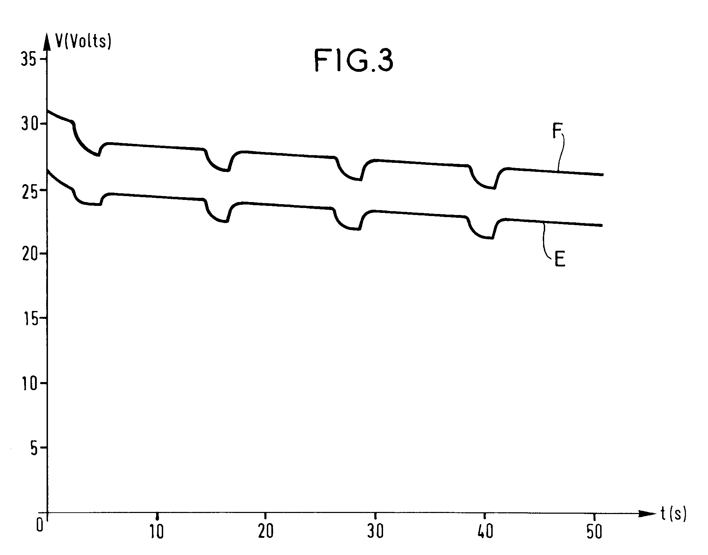

Une batterie selon l'invention a été déchargée à température ambiante, à une densité de courant de 220 mA/cm², avec des impulsions périodiques de courant de 2 secondes à 600 mA/cm² (voir courbe F de la figure 3). Avec de tels régimes de décharge, la tension au bout de 45 secondes de décharge est 27 V (25 V pendant les impulsions à fort régime). Dans les mêmes conditions de décharge, une pile utilisant le matériau cathodique classique $FeS_2$ et identique sur tous les autres points aura une tension de décharge de 22,2 V sous une densité de courant de décharge de 200 mA/cm², et 20,2 V sous 600 mA/cm² (voir courbe E de la figure 3).

Bien entendu, l'invention n'est pas limitée aux exemples de réalisation donnés ci-dessus.

## Revendications

1.  Procédé de préparation d'un composé à base d'un dérivé d'oxyde de vanadium susceptible d'être utilisé comme matériau cathodique dans une pile thermique, procédé selon lequel on réalise un mélange pulvérulent contenant du pentoxyde de vanadium, un matériau carboné et de l'électrolyte de ladite pile, et caractérisé
    -   par le fait que dans ledit mélange, ledit matériau carboné se trouve dans une proportion en poids de $V_2O_5$ comprise entre 3% et 20%, et ledit électrolyte est un mélange d'halogénures alcalins se trouvant dans une proportion en poids de $V_2O_5$ comprise entre 15% et 50%,
    -   et par le fait que l'on effectue un traitement thermique dudit mélange pulvérulent à une température supérieure à la température de fusion dudit mélange d'halogénures, ladite température étant comprise entre 365° et 650°C, pendant une durée comprise entre 15 minutes et 2 heures.

**2.** Procédé de préparation selon la revendication 1, caractérisé par le fait que ledit matériau carboné est du noir de fumée, tel que du noir de carbone, d'acétylène ou de benzène.

**3.** Procédé de préparation selon la revendication 1, caractérisé par le fait que ledit mélange d'halogénures alcalins est un mélange d'halogénures de lithium et de potassium, choisi parmi l'eutectique LiCl-KCl, les mélanges LiCl-KCl contenant entre 50 % et 80 % de LiCl en fractions molaires, les mélanges ternaires LiCl-LiBr-LiF, LiCl-LiBr-KBr.

**4.** Procédé de préparation selon l'une des revendications précédentes, caractérisé par le fait que la proportion en poids dudit matériau carboné est comprise entre 5 % et 10 %.

**5.** Procédé de préparation selon l'une des revendications précédentes, caractérisé par le fait que la proportion en poids dudit mélange d'halogénures alcalins est comprise entre 30 % et 45 %.

**6.** Procédé de préparation selon l'une des revendications précédentes, caractérisé par le fait que ladite température de traitement est comprise entre 410°C et 550°C.

**7.** Procédé de préparation selon la revendication 6, caractérisé par le fait que la durée dudit traitement thermique est comprise entre 1/2 heure et 1 heure.

**8.** Procédé de préparation d'une cathode pour pile thermique, caractérisé par le fait que le composé obtenu par le procédé selon l'une des revendications précédentes est broyé après refroidissement jusqu'à une granulométrie inférieure à 100 micromètres, puis mis en forme de pastille.

**9.** Pile thermique, caractérisée par le fait qu'elle comporte une cathode selon la revendication 8, et en outre une anode de lithium ou alliage de lithium choisi parmi les composés lithium-aluminium, lithium-silicium et lithium-bore, et un électrolyte composé d'un gélifiant et dudit mélange d'halogénures alcalins.

**10.** Pile thermique selon la revendication 9, caractérisée par le fait que le gélifiant est $SiO_2$, MgO ou $Al_2O_3$.

**Claims**

**1.** A process for preparing a compound based upon a vanadium oxide derivative which is suitable for use as a cathode material in a thermal cell, and wherein a powdered mixture is prepared which contains vanadium pentoxide, a material containing carbon, and the electrolyte of said cell, characterized in that
- in said mixture, said carbon containing material is included in proportion to $V_2O_5$, ranging from 3 percent to 20 percent by weight, and in that said electrolyte is a mixture of alkaline halides in proportion to $V_2O_5$, ranging from 15 percent to 50 percent by weight;
- and in that heat processing of said powder mixture is conducted at a temperature which is higher than the melting point of said mixture of halides, with said temperature ranging from 365° C to 650° C for a time period comprised between 15 minutes to 2 hours.

**2.** A preparation process according to claim 1, characterized in that said carbon containing material is flue gas black, such as carbon black, acetylene black or benzene black.

**3.** A preparation process according to claim 1, characterized in that said mixture of alkaline halides is a mixture of lithium and potassium halides, selected from the group consisting of the eutectic LiCl-KCl, mixtures of LiCl-KCl containing from 50 mole percent to 80 mole percent of LiCl, ternary mixtures of LiCl-LiBr-LiF, LiCl-LiBr-Kbr.

**4.** A preparation process according to any one of the preceding claims, characterized in that the proportion of said carbon material ranges from 5 percent to 10 percent by weight of $V_2O_5$.

**5.** A preparation process according to any one of the preceding claims, characterized in that the proportion of said mixture of alkaline halides ranges from 30 percent to 45 percent by weight of $V_2O_5$.

**6.** A preparation process according to any one of the preceding claims, characterized in that said processing temperature ranges from 410°C to 550°C.

**7.** A preparation process according to claim 6, characterized in that the duration of said thermal processing ranges from 1/2 hour to 1 hour.

**8.** A process for preparing a cathode for a thermal cell, characterized in that the compound obtained by the process according to any one of the preceding claims is cooled, then ground to a particle size of less than 100 $\mu$m, and then pelletized.

**9.** A thermal cell, characterized in that it comprises a cathode according to claim 8, and in addition, an anode of lithium or of a lithium alloy selected from the group consisting of compounds of lithium-aluminum, lithium-silicon or lithium-boron, and an electrolyte composed of a gelling agent and of said mixture of alkaline halides.

**10.** A thermal cell according to claim 9, characterized in that the gelling agent is $SiO_2$, $MgO$ or $Al_2O_3$.

**Patentansprüche**

**1.** Verfahren zur Herstellung eines Stoffs auf der Basis eines Vanadiumoxidderivats, der als Kathodenmaterial in einer thermischen Batterie verwendet werden kann, wobei durch das Verfahren eine pulverförmige Mischung hergestellt wird, die Vanadiumpentoxid, ein kohlenstoffhaltiges Material und Elektrolyt enthält, dadurch gekennzeichnet,
- daß in der Mischung das kohlenstoffhaltige Material in einem Verhältnis von 3% bis 20% zum $V_2O_5$-Gewicht vorliegt, und der Elektrolyt eine Mischung von alkalischen Halogeniden ist, die in einem Verhältnis zwischen 15% und 50% zum $V_2O_5$-Gewicht vorliegt; und
- daß man eine Wärmebehandlung der pulverförmigen Mischung bei einer Temperatur oberhalb der Schmelztemperatur der Mischung von Halogeniden durchführt, wobei diese Temperatur zwischen 365°C und 650°C liegt und während einer Dauer von 15 Minuten bis 2 Stunden aufrechterhalten wird.

**2.** Herstellungsverfahren nach Anspruch 1, dadurch gekennzeichnet, daß das kohlenstoffhaltige Material Rauchruß ist, wie etwa Kohlenstoff-, Acetylen- oder Benzolruß.

**3.** Herstellungsverfahren nach Anspruch 1, dadurch gekennzeichnet, daß die Mischung alkalischer Halogenide eine Lithium- und Kaliumhalogenidmischung ist, ausgewählt unter der eutektischen Mischung LiCl-KCl, den LiCl-KCl Mischungen mit 50% bis 80% molaren Anteilen an LiCl, den ternären Mischungen aus LiCl-LiBr-LiF und LiCl-LiBr-KBr.

**4.** Herstellungsverfahren nach einem der vorhergehenden Ansprüche, dadurch gekennzeichnet, daß der Gewichtsanteil des kohlenstoffhaltigen Materials zwischen 5 % und 10 % liegt.

**5.** Herstellungsverfahren nach einem der vorhergehenden Ansprüche, dadurch gekennzeichnet, daß der Gewichtsanteil der Mischung von alkalischen Halogeniden zwischen 30% und 45% liegt.

**6.** Herstellungsverfahren nach einem der vorhergehenden Ansprüche, dadurch gekennzeichnet, daß die Behandlungstemperatur zwischen 410°C und 550°C liegt.

**7.** Herstellungsverfahren nach Anspruch 6, dadurch gekennzeichnet, daß die Dauer der Wärmebehandlung zwischen 1/2 Stunde und 1 Stunde liegt.

**8.** Verfahren zur Herstellung einer Kathode für eine thermische Batterie, dadurch gekennzeichnet, daß der durch das Verfahren gemäß einem der vorhergehenden Ansprüche erhaltene Stoff nach dem Abkühlen auf eine Korngröße unter 100 um gemahlen und anschließend in Tablettenform gebracht wird.

**9.** Thermische Batterie, dadurch gekennzeichnet, daß sie eine Kathode nach Anspruch 8 und weiter eine Anode aus Lithium oder einer Lithiumlegierung, die unter den Verbindungen Lithium-Aluminium, Lithium-Silizium und Lithium-Bor gewählt ist, und einen Elektrolyten umfaßt, der aus einem Geliermittel und der Mischung der alkalischen Halogeniden besteht.

10. Thermische Batterie nach Anspruch 9, dadurch gekennzeichnet, daß das Geliermittel $SiO_2$, MgO oder $Al_2O_3$ ist.

# FIG.1

# FIG.2

FIG.3

EP 0 343 586 B1